# EUROPEAN PATENT APPLICATION

(11) **EP 4 699 902 A1**
(43) Date of publication of application: **25.02.2026**
(21) Application number: 25800695.6
(22) Date of filing: 01.04.2025
(51) Int. Cl.: B62D 21/02, B60K 1/04, B62D 21/09, B62D 25/20

(54) **REAR STRUCTURE OF ELECTRIC VEHICLE, AND ELECTRIC VEHICLE**

(30) Priority: 27.06.2024 CN 202410848531
(71) Applicant: Chery Automobile Co., Ltd., Wuhu, Anhui 241006 (CN)
(72) Inventor: LU, Shengmei, Wuhu, Anhui 241006 (CN); LIU, Lili, Wuhu, Anhui 241006 (CN); CHENG, Kai, Wuhu, Anhui 241006 (CN)
(74) Representative: Yang, Shu
(86) International application number: PCT/CN2025/086704
(87) International publication number: WO 2026/001163

(57) **Abstract**

Disclosed are a rear structure of an electric vehicle and an electric vehicle. The rear structure includes a rear floor, a first longitudinal beam, a second longitudinal beam, a first crossbeam, a second crossbeam, a storage battery system, and a conversion and distribution unit (CDU) system. The first longitudinal beam and the second longitudinal beam are disposed on both sides of a bottom of the rear floor, respectively; a front end of the first longitudinal beam is connected to a front end of the second longitudinal beam by the first crossbeam; a rear end of the first longitudinal beam is connected to a rear end of the second longitudinal beam by the second crossbeam; the storage battery system and the CDU system are mounted on the rear floor, and the storage battery system is located above the second crossbeam; the CDU system is located in front of the storage battery system. The present disclosure may avoid safety issues caused by a high-speed rear collision and improve the modal performances of the rear floor and the storage battery system.

## Description

The present disclosure claims priority to Chinese Patent Application No. 202410848531.X, filed on June 27, 2024 and entitled "REAR STRUCTURE OF ELECTRIC FOUR-WHEEL DRIVE VEHICLE AND ELECTRIC VEHICLE", the disclosure of which is herein incorporated by reference in its entirety.

### TECHNICAL FIELD

The present disclosure relates to the field of electric vehicle technologies, and in particular, relates to a rear structure of an electric vehicle and an electric vehicle.

### BACKGROUND

Environmental pollution caused by the exhaust gas of traditional vehicles is becoming increasingly serious. In order to reduce air pollution, the development of electric vehicles such as plug-in hybrid electric vehicles has been put on the development schedule. Since electric vehicles emit fewer pollutants during driving and have less environmental impact than traditional vehicles, the prospect of electric vehicles is widely promising.

Due to the increased competition of vehicle products, the product safety and quality of electric vehicles are continuously improved to meet consumer demands. Safety is a performance that needs to be ensured and is also becoming an increasingly important consideration for consumers when purchasing electric vehicles.

### SUMMARY

The present disclosure provides a rear structure of an electric vehicle and an electric vehicle. The technical solutions are as follows:

In one aspect, a rear structure of an electric vehicle is provided. The rear structure includes: a rear floor, a first longitudinal beam, a second longitudinal beam, a first crossbeam, a second crossbeam, a storage battery system, and a conversion and distribution unit (CDU) system, wherein
the first longitudinal beam and the second longitudinal beam are disposed on both sides of a bottom of the rear floor, respectively;
a front end of the first longitudinal beam is connected to a front end of the second longitudinal beam by the first crossbeam;
a rear end of the first longitudinal beam is connected to a rear end of the second longitudinal beam by the second crossbeam;
the storage battery system and the CDU system are mounted on the rear floor, the storage battery system is located above the second crossbeam, and the CDU system is located in front of the storage battery system.

In some embodiments, a storage battery mounting reinforcement plate is disposed on the rear floor, wherein the storage battery system is mounted on the storage battery mounting reinforcement plate.

In some embodiments, a CDU mounting plate is disposed on the rear floor, wherein the CDU mounting plate and the storage battery mounting reinforcement plate are disposed at different positions, respectively, and a side of the CDU mounting plate is in lap joint with a side of the storage battery mounting reinforcement plate.

In some embodiments, the CDU system is mounted at a front end of the CDU mounting plate through a CDU bracket, and a programmable controller (PLC) communication conversion module is mounted at a rear end of the CDU mounting plate; and the CDU system is located between the first crossbeam and the second crossbeam.

In some embodiments, reinforcement bars are disposed on the CDU mounting plate and the storage battery mounting reinforcement plate, and a welding face is disposed at a lap-joint position between the CDU mounting plate and the storage battery mounting reinforcement plate.

In some embodiments, both ends of the first crossbeam are connected to the first longitudinal beam and the second longitudinal beam by connection plates, respectively;
both ends of the second crossbeam are connected to the first longitudinal beam and the second longitudinal beam by connection plates, respectively.

In some embodiments, a reinforcement bar is disposed on the rear floor at a position where a side face of the second crossbeam is located;
a reinforcement bar is disposed on the rear floor at a position where a side face of the storage battery system is located; and
a reinforcement bar is disposed on the rear floor at a position where a side face of the CDU system is located.

In some embodiments, a front end of the rear floor is connected to a middle floor, a rear end of the rear floor is connected to a rear wall outer panel, and left and right sides of the rear floor are connected to rear floor connection plates, respectively.

In some embodiments, the storage battery system is located at a middle position above the second crossbeam.

In another aspect, an electric vehicle is provided. The electric vehicle is configured with the rear structure of the electric vehicle according to any one of the above embodiments.

Therefore, the present disclosure at least has the following beneficial effects.

In the present disclosure, the CDU system is disposed in front of the storage battery system, such that the safety distance between the CDU system and the rear panel increases, and the safety issue caused by the rear of the electric vehicle in the case of a high-speed collision is effectively avoided. Two crossbeams and two longitudinal beams are disposed on the rear floor, so that the modal stiffness performance of the overall structure of the rear floor is improved. The storage battery system is mounted above a second crossbeam, such that the modal performance of the storage battery system is improved, and the CDU system located in front of the storage battery system is further protected.

In addition, in the present disclosure, since the second crossbeam located at the rear end is disposed on the rear floor, the modal stiffness performance of the rear floor is ensured. Therefore, the thickness of the rear floor is appropriately reduced, thereby achieving lightweighting. Moreover, reinforcement bars are disposed on the rear floor, such that the local stress concentration caused by the mounting of devices is reduced, thereby reducing the risk of sheet metal fatigue cracking. Meanwhile, the transfer function and the idle vibration noise are reduced, and the noise, vibration, and harshness (NVH) performance of the vehicle is improved, thereby improving the ride comfort.

In addition, in the present disclosure, the CDU mounting plate is in lap joint with the storage battery mounting reinforcement plate to form an integrated structure, so that the CDU mounting plate, the storage battery mounting reinforcement plate, and the rear floor form a three-layer welding structure, and the structural integrity of the rear floor and various devices mounted on the rear floor is ensured.

### BRIEF DESCRIPTION OF DRAWINGS

The accompanying drawings constituting a part of the present disclosure are intended to provide further understanding of the present disclosure. Exemplary embodiments of the present disclosure and illustrations thereof are used to explain the present disclosure and do not constitute an undue limitation to the present disclosure.
FIG. 1 is a schematic diagram of a rear structure of an electric vehicle according to some embodiments of the present disclosure;
FIG. 2 is a local schematic diagram of a rear structure of an electric vehicle according to some embodiments of the present disclosure;
FIG. 3 is a top view of a rear structure of an electric vehicle according to some embodiments of the present disclosure;
FIG. 4 is a schematic cross-sectional diagram of a rear structure of an electric vehicle according to some embodiments of the present disclosure;
FIG. 5 is another schematic cross-sectional diagram of a rear structure of an electric vehicle according to some embodiments of the present disclosure;
FIG. 6 is a schematic diagram of a bottom face of a rear structure of an electric vehicle according to some embodiments of the present disclosure;
FIG. 7 is an exploded diagram of a rear structure of an electric vehicle according to some embodiments of the present disclosure;
FIG. 8 is a schematic diagram showing surrounding connections of a rear structure of an electric vehicle according to some embodiments of the present disclosure;
FIG. 9 is a schematic structural diagram of a rear floor according to some embodiments of the present disclosure;
FIG. 10 is a schematic structural diagram of a storage battery mounting reinforcement plate according to some embodiments of the present disclosure;
FIG. 11 is a schematic structural diagram of a CDU mounting plate according to some embodiments of the present disclosure; and
FIG. 12 is a schematic structural diagram of a second crossbeam according to some embodiments of the present disclosure.

The spacings or dimensions between parts are exaggerated to show their positions, and the schematic diagrams are for illustration purposes only.

The reference numerals in the accompanying drawings are respectively denoted as:
1, CDU system; 2, communication conversion module; 3, storage battery system; 4, rear floor;
5, CDU mounting plate; 6, CDU bracket; 7, storage battery mounting reinforcement plate;
8, second crossbeam-right connection plate; 9, second crossbeam; 10, second crossbeam-left connection plate;
11, first crossbeam-right connection plate; 12, first crossbeam; 13, first crossbeam-left connection plate;
14, first longitudinal beam; 15, second longitudinal beam; 16, middle floor;
17, rear floor-right rear connection plate; 18, rear outer panel; 19, rear floor-left rear connection plate.

### DETAILED DESCRIPTION

It should be noted that the following detailed descriptions are exemplary and intended to provide further explanation of the present disclosure. Unless otherwise indicated, all technical and scientific terms used herein have the same meaning as commonly understood by those of ordinary skill in the art to which the present disclosure belongs.

When upgrading a conventional fuel vehicle to a plug-in hybrid electric vehicle based on its original platform, most manufacturers do not reserve space for a CDU system in the layout. Most manufacturers consider arranging the system on the rear floor with a large space, but this involves the safety issue caused by the rear structure in a high-speed collision. According to GB20072 criteria, the electrical safety test at the high-speed collision at 50 km/h on the rear structure is a mandatory inspection item. To prevent the fuel tank from leakage, conventional fuel vehicles rely primarily on the deformation of the rear energy absorption box and the rear section of the rear longitudinal beam for energy absorption. However, the CDU system is disposed on the rear floor at a position proximal to the rear end. In the case of a collision, after the rear longitudinal beam is subjected to the impact from the obstacle avoidance, the rear section is deformed, and the back door and the back wall panel is collided with the obstacle avoidance and compresses the CDU system. Since the CDU system is a high-voltage component, the electrical safety risk is large.

In addition, the NVH is also important indicators for evaluating the performance of the vehicle and increasingly important considerations for consumers when purchasing vehicles. One way to improve the NVH performance of the entire vehicle is to suppress the vibration of large sheet metal parts. The rear floor is one of the main large sheet metals on the vehicle body, and the CDU system, the storage battery system, the communication conversion module, the on-board tools, and the like of most vehicle models are mounted on the rear floor. Therefore, the requirements for the rear floor are more stringent than those for most sheet metal parts. Firstly, the modal stiffness performance of the rear floor should be sufficiently high, above the idling range, and avoid the main excitation frequency to avoid the resonance phenomenon. In addition, the modal performance of the storage battery system also needs to be ensured to avoid unnecessary cracking. Therefore, improvement of the NVH performance of the entire vehicle is crucial to improving the ride comfort of the vehicle.

In some practices, to ensure the safety performance of the CDU system and improve the NVH performance of the vehicle, there are three improvement methods: replacing the material of the rear floor, increasing the material thickness of the rear floor, and adding a reinforcing member around the rear floor spare tire well. The shortcomings of these improvement methods are also obvious. Replacing the material of the rear floor increases the difficulty of the stamping process, and increasing the material thickness of the rear floor or adding the reinforcing member around the rear floor spare tire well increases the weight of the vehicle body and increases the cost.

Based on this, an objective of the present disclosure is to provide a rear structure of an electric vehicle and an electric vehicle, in which the CDU system is disposed in front of the storage battery system, such that the safety distance between the CDU system and the rear panel increases, and the safety issue caused by the rear of the electric vehicle in the case of a high-speed collision is effectively avoided. In addition, two crossbeams and two longitudinal beams are disposed on the rear floor, so that the modal stiffness performance of the overall structure of the rear floor is improved. Moreover, the storage battery system is mounted above a second crossbeam, such that the modal performance of the storage battery system is improved, and the CDU system located in front of the storage battery system is further protected.

The rear structure of the electric vehicle and the electric vehicle according to the present disclosure are described in detail in the following embodiments.

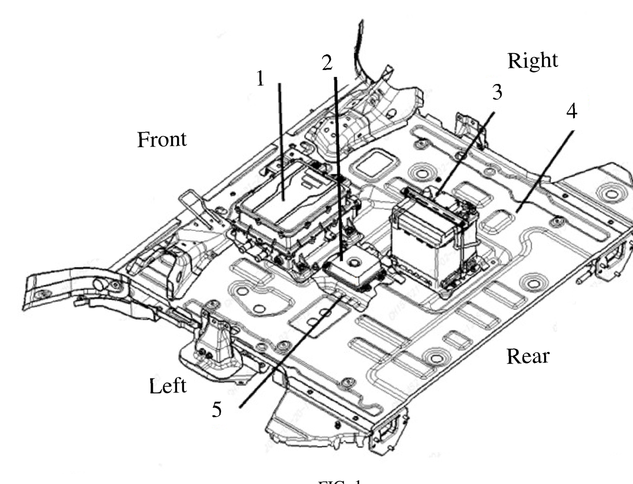

In some embodiments of the present disclosure, a rear structure of an electric vehicle is provided. Referring to FIGS. 1 to 12, the rear structure of the electric vehicle includes a rear floor 4, a first longitudinal beam 14, a second longitudinal beam 15, a first crossbeam 12, a second crossbeam 9, a storage battery system 3, and a CDU system 1.

The first longitudinal beam 14 and the second longitudinal beam 15 are disposed on both sides of the bottom of the rear floor 4, respectively, the front end of the first longitudinal beam 14 is connected to the front end of the second longitudinal beam 15 by the first crossbeam 12, and the rear end of the first longitudinal beam 14 is connected to the rear end of the second longitudinal beam 15 by the second crossbeam 9. The storage battery system 3 and the CDU system 1 are mounted on the rear floor 4, the storage battery system 3 is located above the second crossbeam 9, and the CDU system 1 is located in front of the storage battery system 3.

The rear end of the first longitudinal beam 14 is connected to the rear end of the second longitudinal beam 15 by the second crossbeam 9, such that the modal performance of the rear floor 4 is improved. The storage battery system 3 is located above the second crossbeam 9, such that the modal performance of the storage battery system 3 is improved. The CDU system 1 is located in front of the storage battery system 3, such that the distance between the CDU system 1 and a rear panel increases.

In some embodiments, the electric vehicle is an electric four-wheel drive vehicle.

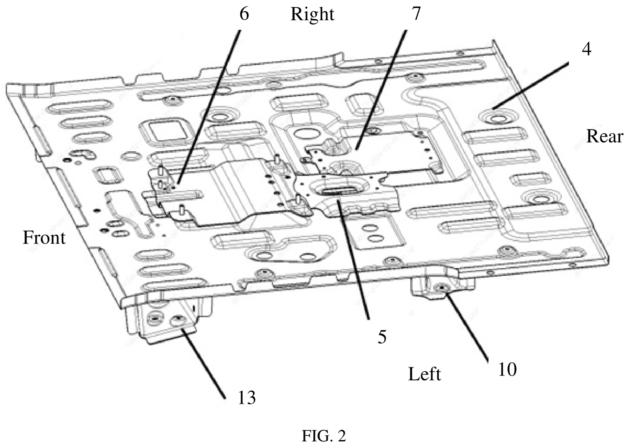

In some embodiments, as shown in FIGS. 1 and 2, a communication conversion module 2, the storage battery system 3, and the CDU system 1 are mounted on the rear floor 4, and a CDU mounting plate 5 and a storage battery mounting reinforcement plate 7 are disposed on the rear floor 4. The CDU system 1 and the communication conversion module 2 are mounted on the rear floor 4 through the CDU mounting plate 5, and the storage battery system 3 is mounted on the rear floor 4 through the storage battery mounting reinforcement plate 7.

In some embodiments, the communication conversion module 2 is a PLC communication conversion module.

In some embodiments, as shown in FIG. 2, the storage battery mounting reinforcement plate 7 is fixedly connected to the rear floor 4, and the storage battery mounting reinforcement plate 7 is mounted at a middle position above the second crossbeam 9, so that the storage battery system 3 is located at the middle position above the second crossbeam. Through the support of the second crossbeam 9, the modal performance of the rear floor is improved, and the modal performance of the storage battery system is also further improved.

In some embodiments, as shown in FIGS. 1 and 2, the CDU system 1 is located between the first crossbeam 12 and the second crossbeam 9. The CDU system 1 is located in front of the storage battery system 3, so that the distance between the CDU system 1 and the rear panel is increased, and the safety issue caused by a high-speed rear collision are solved. In addition, the storage battery system 3 is disposed above the second crossbeam 9, such that the modal performance of the storage battery system is improved, the CDU system located in front of the storage battery system is further protected, and the NVH performance of the vehicle is improved.

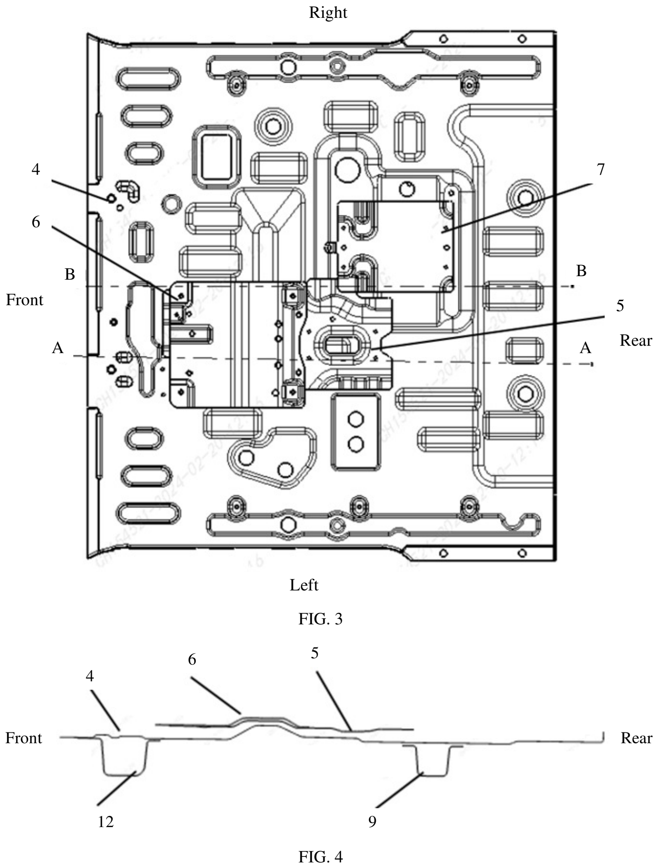

In some embodiments, as shown in FIGS. 2 and 3, the rear floor 4 is provided with the CDU mounting plate 5 and the storage battery mounting reinforcement plate 7, the CDU mounting plate 5 and the storage battery mounting reinforcement plate 7 are disposed at different positions, respectively, and a side of the CDU mounting plate 5 is in lap joint with a side of the storage battery mounting reinforcement plate 7. Exemplarily, a side of the rear end of the CDU mounting plate 5 proximal to the storage battery system 3 is in lap joint with a side of the front end of the storage battery mounting reinforcement plate 7 proximal to the CDU mounting plate 5.

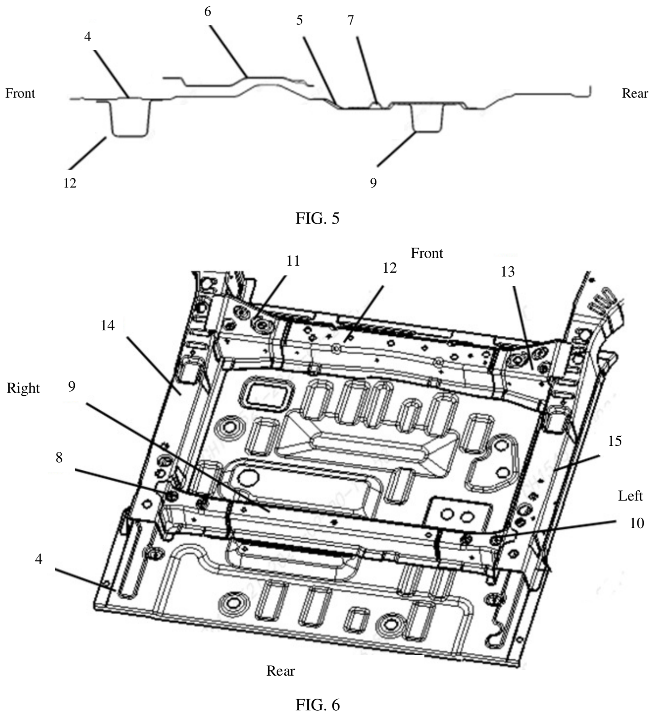

In some embodiments, as shown in FIGS. 4 and 5, the front end of the CDU mounting plate 5 is configured to mount a CDU bracket 6, and the shape of the CDU bracket 6 is adapted to the shape of the front end of the CDU mounting plate 5. The rear end of the CDU mounting plate 5 is configured to mount the communication conversion module 2. The front end of the CDU mounting plate 5 is higher than the rear end, and the rear end of the CDU mounting plate 5 is lower to be in lap joint with the storage battery mounting reinforcement plate 7.

Exemplarily, the CDU system 1 is mounted at the front end of the CDU mounting plate 5 through the CDU bracket 6, and the communication conversion module 2 is mounted at the rear end of the CDU mounting plate 5. As shown in FIG. 1, the communication conversion module 2 is located at the front end of the storage battery system 3 and a side proximal to the CDU system 1. The CDU system 1 and the communication conversion module 2 are arranged in the length direction of the CDU mounting plate 5, and the length direction of the CDU mounting plate 5 is in the same direction as the front-rear direction of the rear floor.

In some embodiments, for the lightweighting of the rear floor 4, reinforcement bars are disposed on the rear floor 4 to ensure the strength of the rear floor, reduce the local stress concentration of the structure caused by device mounting, and reduce the risk of sheet metal fatigue cracking. Exemplarily, the arrangement of the reinforcement bar includes at least one of:
(1) The reinforcement bar is disposed on the rear floor 4 at a position where the side face of the second crossbeam 9 is located. For example, the reinforcement bar is disposed on the rear floor 4 at a position where the rear side of the second crossbeam 9 is located.
(2) The reinforcement bar is disposed on the rear floor 4 at a position where the side face of the storage battery system 3 is located. For example, the reinforcement bars are disposed on the rear floor 4 at positions where the left and right sides of the storage battery system 3 are located.
(3) The reinforcement bar is disposed on the rear floor 4 at a position where the side face of the CDU system 1 is located. For example, the reinforcement bars are disposed on the rear floor 4 at positions where the left and right sides of the CDU system 1 are located.
(4) The reinforcement bars are disposed on the CDU mounting plate 5 and the storage battery mounting reinforcement plate 7, thereby improving the strength of the CDU mounting plate 5 and the storage battery mounting reinforcement plate 7.

Therefore, through the arrangement of the reinforcement bar structures on the rear floor 4, the thickness of the rear floor 4 is appropriately reduced on the basis of ensuring the modal performance of the rear floor 4, and the lightweighting of the rear floor 4 is achieved on the premise of ensuring the strength of the rear floor. The arrangement of the reinforcement bars further protects the storage battery system 3 and the CDU system 1.

In some embodiments, a welding face is disposed at a lap-joint position between the CDU mounting plate 5 and the storage battery mounting reinforcement plate 7, so that the CDU mounting plate 5, the storage battery mounting reinforcement plate 7, and the rear floor 4 jointly form a three-layer welding structure.

In some embodiments, as shown in FIG. 6, two longitudinal beams and two crossbeams are disposed on the bottom face of the rear floor 4. The two longitudinal beams include a first longitudinal beam 14 and a second longitudinal beam 15. The first longitudinal beam 14 is welded and fixed to the right side of the bottom of the rear floor 4, and the second longitudinal beam 15 is welded and fixed to the left side of the bottom of the rear floor 4. The front end of the first longitudinal beam 14 is connected to the front end of the second longitudinal beam 15 by a first crossbeam 12. The rear end of the first longitudinal beam 14 is connected to the rear end of the second longitudinal beam 15 by a second crossbeam 9.

Therefore, the two longitudinal beams and the two crossbeams form a frame structure, and the two crossbeams and the two longitudinal beams are both fixedly connected to the bottom face of the rear floor, so that the modal performance of the rear floor is improved, and the thickness of the rear floor does not need to be increased.

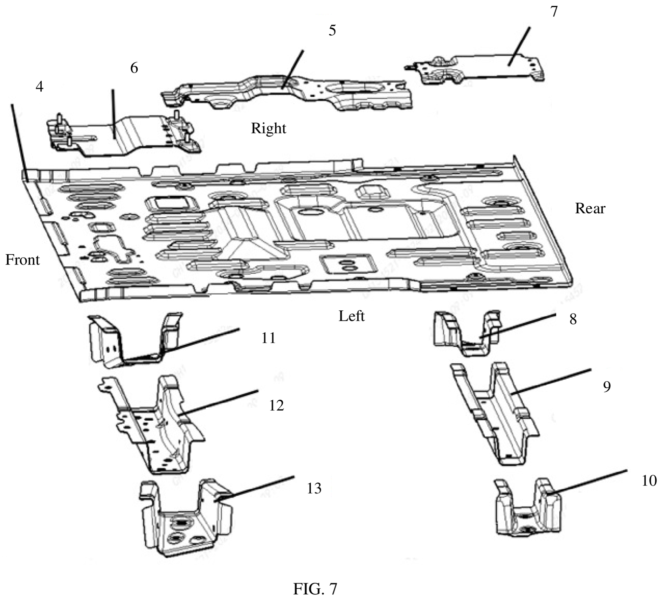

In some embodiments, as shown in FIG. 7, both ends of the first crossbeam 12 are connected to the first longitudinal beam 14 and the second longitudinal beam 15 by connection plates, respectively; and both ends of the second crossbeam 9 are connected to the first longitudinal beam 14 and the second longitudinal beam 15 by connection plates, respectively.

Exemplarily, the first longitudinal beam 14 is a longitudinal beam on the right side of the rear floor 4, and the second longitudinal beam 15 is a longitudinal beam on the left side of the rear floor 4. Then, the right end of the first crossbeam 12 is connected to the front end of the first longitudinal beam 14 by a first crossbeam-right connection plate 11, and the left end of the first crossbeam 12 is connected to the front end of the second longitudinal beam 15 by a first crossbeam-left connection plate 13. The right end of the second crossbeam 9 is connected to the rear end of the first longitudinal beam 14 by a second crossbeam-right connection plate 8, and the left end of the second crossbeam 9 is connected to the rear end of the second longitudinal beam 15 by a second crossbeam-left connection plate 10.

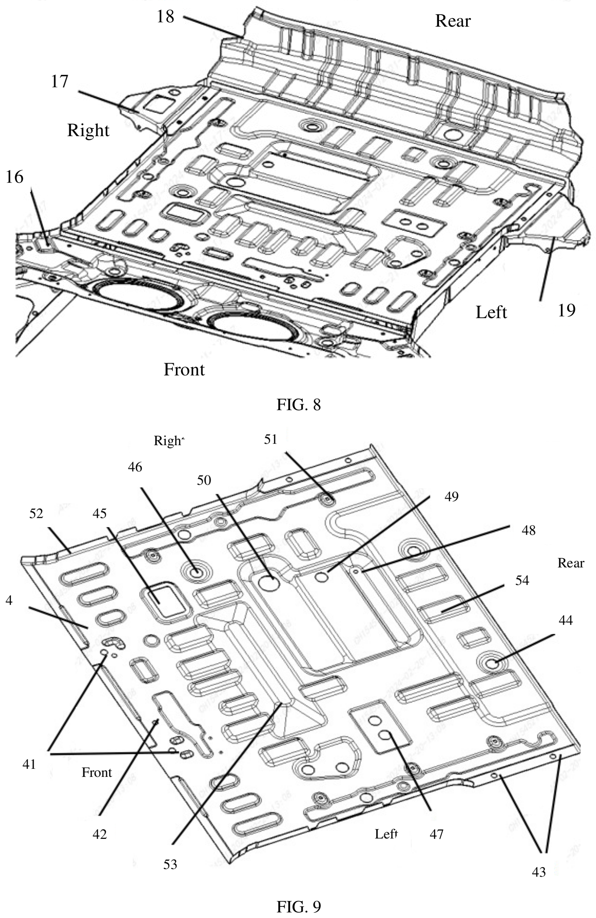

In some embodiments, as shown in FIG. 8, the front end of the rear floor 4 is connected to a middle floor 16, the rear end of the rear floor 4 is connected to a rear wall outer panel 18, and the left and right sides of the rear floor 4 are connected to rear floor connection plates, respectively.

Exemplarily, the rear floor connection plates include a rear floor-right rear connection plate 17 and a rear floor-left rear connection plate 19. The right side of the rear floor 4 is connected to the rear floor-right rear connection plate 17, and the left side of the rear floor 4 is connected to the rear floor-left rear connection plate 19.

In some embodiments, as shown in FIG. 9, the rear floor 4 is provided with seat belt mounting holes 41, a seat mounting hole 42, positioning via holes 43, a positioning hole 44, a high-voltage wire mounting hole 45, a wheel speed sensor mounting hole 46, a water pipe mounting hole 47, a liquid leakage hole 48, a storage battery exhaust mounting hole 49, a wiring harness mounting hole 50, guard plate mounting holes 51, a welding face 52 that are in lap joint with the surroundings, a combination mounting point 53, and reinforcement bars 54. The combination mounting point 53 refers to a combination mounting point of a three-in-one motor including an avoidance motor, a motor controller, and a reduction gearbox.

The seat belt mounting holes 41 are located at the middle positions of the front end of the rear floor 4 for mounting a seat belt structure.

The seat mounting hole 42 is located at the front end of the rear floor 4 for mounting a seat.

The positioning via holes 43 are located at the edges of both sides of the rear floor 4.

The positioning hole 44 is located at the rear end of the rear floor 4 for positioning and mounting the rear floor 4.

The high-voltage wire mounting hole 45 is located on a side of the CDU system 1 for the high-voltage wire of an electrical structure to pass through.

The wheel speed sensor mounting hole 46 is proximal to the high-voltage wire mounting hole 4e for mounting a wheel speed sensor.

The water pipe mounting hole 47 is formed in a side of the rear end of the CDU mounting plate 5 distal to the storage battery mounting reinforcement plate 7 for a water pipe to pass through.

The liquid leakage hole 48 is located proximal to the rear end of the storage battery mounting reinforcement plate 7.

The storage battery exhaust mounting hole 49 is located in the storage battery mounting reinforcement plate 7 for achieving exhaust ventilation and heat dissipation of the storage battery system.

The wiring harness mounting hole 50 is disposed proximal to the storage battery exhaust mounting hole 49 for arranging the corresponding wiring harness.

The guard plate mounting holes 51 are located at the edges of both sides of the rear floor 4 for mounting guard plates, so as to improve safety.

The welding face 52 is located at the edge of the rear floor 4 for achieving the fixed connection between the rear floor 4 and the surrounding structures.

The combination mounting point 53 of the three-in-one motor including the avoidance motor, the motor controller, and the reduction gearbox is configured to mount the corresponding structures. The reinforcement bars 54 are located at the rear end of the rear floor 4, on both sides of the storage battery mounting reinforcement plate 7, on both sides of the CDU mounting plate, and at the front end of the rear floor 4, for improving the strength of the rear floor 4.

By improving the overall structure of the rear floor and providing reasonable reinforcement bars 54, the local structural characteristics of the rear floor are improved, such that the modal stiffness performance level of the overall structure of the rear floor is improved, the local stress concentration of the structure caused by device mounting and reduces the risk of sheet metal fatigue cracking are reduced.

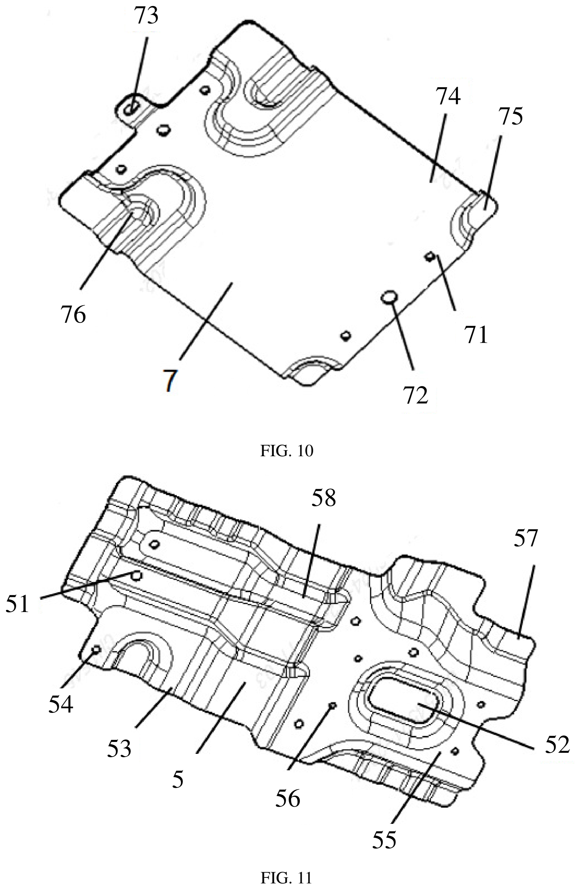

In some embodiments, as shown in FIG. 10, the structure of the storage battery mounting reinforcement plate 7 includes: battery mounting nut holes 71, positioning holes 72, a wiring harness mounting hole 73, a battery mounting mating surface 74, welding faces 75, and a reinforcement bar 76. The structure improves the modal performance of the storage battery system 3 through qualified lap joint and arrangement.

The battery mounting nut holes 71 are located at the front end and the rear end of the storage battery mounting reinforcement plate 7, with each end provided with two nut holes, for fixing the storage battery mounting reinforcement plate 7 to the rear floor 4.

The positioning hole 72 is located between two battery mounting nut holes 71 at each end of the storage battery mounting reinforcement plate 7 for mounting and positioning.

The wiring harness mounting hole 73 is located at the front end of the storage battery mounting reinforcement plate 7 for disposing the corresponding wiring harness.

The battery mounting mating surface 74 is located on the top surface main body portion of the storage battery mounting reinforcement plate 7 and serves as the mounting face for the storage battery system 3.

The welding faces 75 are located at four corners for welding and fixing to the rear floor 4, a welding face 75 on a side of the front end is configured to be in lap joint with and weld to the CDU mounting plate 5, and the reinforcement bar 76 is disposed here to improve the strength.

In some embodiments, as shown in FIG. 11, the CDU mounting plate 5 is configured to connect the storage battery mounting reinforcement plate 7 and the CDU bracket 6 to form a whole, and is also configured to mount the communication conversion module 2 as a device serving as a link between parts. The structure of the CDU mounting plate 5 includes: positioning holes 51, a liquid leakage hole 52, a CDU mounting bracket matching surface 53, a CDU bracket mounting hole 54, a communication conversion module mounting matching surface 55, a communication conversion module mounting hole 56, a welding face 57, and a reinforcement bar 58, such that the overall mode of the rear structure is improved.

The positioning holes 51 are located at the front end and the rear end of the CDU mounting plate 5 for positioning and mounting the CDU mounting plate 5.

The liquid leakage hole 52 is located at the rear end of the CDU mounting plate 5. On the mounted rear floor 4, the communication conversion module 2 needs to be correspondingly mounted directly above the position.

The CDU mounting bracket matching surface 53 is located at the front end of the CDU mounting plate 5 for matching the CDU mounting bracket.

The CDU bracket mounting hole 54 is located on the CDU mounting bracket matching surface 53 for mounting the CDU mounting bracket 6.

The communication conversion module mounting matching surface 55 is located on the peripheral side of the liquid leakage hole 52, and is provided with a communication conversion module mounting hole 56 for mounting the communication conversion module 2.

The welding face 57 is located on a side of the rear end of the CDU mounting plate 5 proximal to the storage battery mounting reinforcement plate 7 to be in lap joint with and weld to the welding face at the reinforcement bar 58. The reinforcement bars 58 are arranged along the front end of the CDU mounting plate 5 to improve the strength.

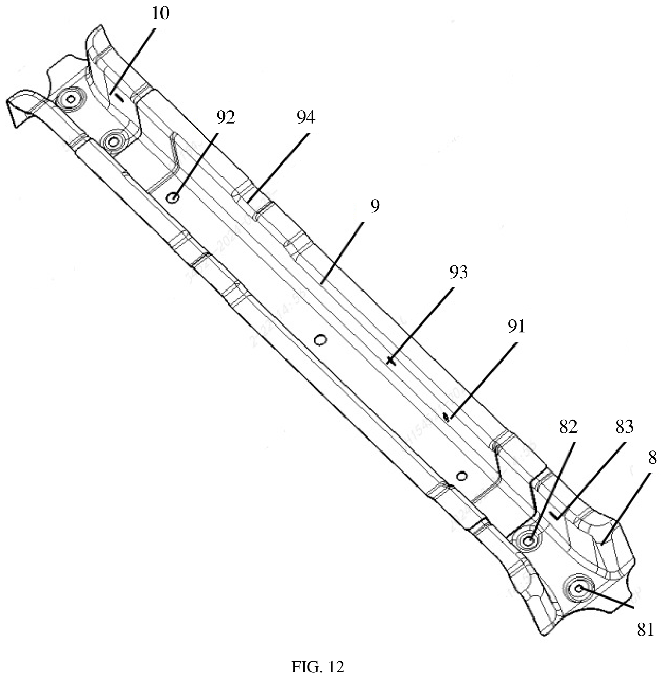

In some embodiments, as shown in FIG. 12, the second crossbeam-right connection plate 8, the second crossbeam 9, and the second crossbeam-left connection plate 10 are connected in sequence. The structure improves the modal performance of the rear floor 4.

The second crossbeam-right connection plate 8 includes a positioning hole 81, a liquid leakage hole 82, and a wiring harness mounting hole 83 for positioning, liquid leakage, and wiring harness mounting.

The second crossbeam 9 includes a positioning hole 91, a liquid leakage hole 92, a wiring harness mounting hole 93, and a reinforcement bar 94, such that the overall strength of the second crossbeam is improved, thereby indirectly improving the modal performance of the rear floor 4.

In the embodiments of the present disclosure, the second crossbeam is disposed on the rear floor to form a frame structure with the longitudinal beam and the first crossbeam, such that the modal performance of the rear floor is improved, and the issue that the modal performance of the rear floor does not meet the standard is solved.

In addition, the storage battery system is mounted at the middle position directly above the second crossbeam, and the modal performance issue of the battery is solved through the support of the second crossbeam.

Moreover, the CDU system is disposed in front of the storage battery system, such that the safety distance between the CDU system and the rear panel increases, and the safety issue caused by the high-speed rear collision is solved. This may both meet the requirement of preventing the CDU from being compressed at the high-speed collision at 50 km/h on the rear structure according to GB20072 criteria through controlling the deformation position at the rear, and achieve the lightest weight while avoiding electrical safety risks.

In some other embodiments of the present disclosure, an electric vehicle is provided. The electric vehicle is configured with the rear structure of the electric vehicle as described in the above embodiments, and the rear structure of the electric vehicle is shown in FIGS. 1 to 12.

By disposing the second crossbeam on the rear floor to form a frame structure with the longitudinal beam and the first crossbeam, the modal stiffness performance level of the overall structure of the rear floor structure is improved, and the local stress concentration caused by the mounting of accessories is also reduced, thereby reducing the risk of sheet metal fatigue cracking, appropriately reducing the thickness of the rear floor, and achieving lightweighting.

In addition, the combined structure of the rear floor and the second crossbeam may achieve the performance objectives required by the rear floor mode. By analysis, the rear structural strength meets the requirements, the rear local mode is improved by about 47.3%, and the mode of the storage battery is improved by about 29.1%. After the modal performance is improved, abnormal sound caused by insufficient modes and stiffness is avoided, the transfer function is reduced, the idle vibration noise is reduced, and the NVH performance of the vehicle is improved, thereby improving the ride comfort.

In some other embodiments of the present disclosure, a rear structure of an electric four-wheel drive vehicle is provided. The rear structure includes a rear floor body. Longitudinal beams are disposed on both sides of the bottom of the rear floor body, and the front ends of the longitudinal beams are connected by a first crossbeam of the rear floor; positions of the two longitudinal beams proximal to the rear ends are connected by a second crossbeam of the rear floor to improve the modal performance of the rear floor body; the storage battery system and the CDU system are mounted on the rear floor body, and the storage battery system is located above the second crossbeam of the rear floor to improve the modal performance of the storage battery; and the CDU system is located on the front side of the storage battery system to increase the distance from the rear panel.

In some embodiments, the rear floor body is provided with a storage battery mounting reinforcement plate, and the storage battery system is mounted on the storage battery mounting reinforcement plate.

In some embodiments, the rear floor body is provided with a CDU mounting plate, the CDU mounting plate and the storage battery mounting reinforcement plate are staggered, and a side of the rear end of the CDU mounting plate proximal to the storage battery system is in lap joint with a side of the front end of the storage battery mounting reinforcement plate.

In some embodiments, the CDU system is mounted at the front end of the CDU mounting plate through the CDU bracket, and the PLC communication conversion module is mounted at the rear end of the CDU mounting plate; and the CDU system is located between the first crossbeam of the rear floor and the second crossbeam of the rear floor.

In some embodiments, both ends of the first crossbeam of the rear floor and the second crossbeam of the rear floor are connected to the longitudinal beams through connection plates.

In some embodiments, several reinforcement bars are arranged on the rear floor body on the rear side of the second crossbeam of the rear floor and on both sides of the storage battery system and the CDU system.

In some embodiments, reinforcement bars are arranged on the CDU mounting plate and the storage battery mounting reinforcement plate, and a welding face is disposed at the lap-joint position between the CDU mounting plate and the storage battery mounting reinforcement plate to jointly form three-layer welding structure with the rear floor body.

In some embodiments, the front end of the rear floor body is connected to a middle floor body, the rear end thereof is connected to the rear wall outer panel, and both sides of the rear end thereof are connected to the rear floor connection plates.

In some embodiments, the storage battery system is located at the middle position above the second crossbeam of the rear floor.

Described above are merely optional embodiments of the present disclosure and are not intended to limit the present disclosure. For those skilled in the art, various changes and variations may be made to the present disclosure. Any modifications, equivalent substitutions, improvements, and the like made within the spirit and principle of the present disclosure should all fall within the scope of protection of the present disclosure.

## Claims

1. A rear structure of an electric vehicle, comprising: a rear floor, a first longitudinal beam, a second longitudinal beam, a first crossbeam, a second crossbeam, a storage battery system, and a conversion and distribution unit (CDU) system, wherein
the first longitudinal beam and the second longitudinal beam are disposed on both sides of a bottom of the rear floor, respectively;
a front end of the first longitudinal beam is connected to a front end of the second longitudinal beam by the first crossbeam;
a rear end of the first longitudinal beam is connected to a rear end of the second longitudinal beam by the second crossbeam;
the storage battery system and the CDU system are mounted on the rear floor, the storage battery system is located above the second crossbeam, and the CDU system is located in front of the storage battery system.

2. The rear structure of the electric vehicle according to claim 1, wherein a storage battery mounting reinforcement plate is disposed on the rear floor, wherein the storage battery system is mounted on the storage battery mounting reinforcement plate.

3. The rear structure of the electric vehicle according to claim 2, wherein a CDU mounting plate is disposed on the rear floor, wherein the CDU mounting plate and the storage battery mounting reinforcement plate are disposed at different positions, respectively, and a side of the CDU mounting plate is in lap joint with a side of the storage battery mounting reinforcement plate.

4. The rear structure of the electric vehicle according to claim 3, wherein the CDU system is mounted at a front end of the CDU mounting plate through a CDU bracket, and a communication conversion module is mounted at a rear end of the CDU mounting plate; and the CDU system is located between the first crossbeam and the second crossbeam.

5. The rear structure of the electric vehicle according to claim 3, wherein reinforcement bars are disposed on the CDU mounting plate and the storage battery mounting reinforcement plate, and a welding face is disposed at a lap-joint position between the CDU mounting plate and the storage battery mounting reinforcement plate.

6. The rear structure of the electric vehicle according to claims 1 to 5, wherein both ends of the first crossbeam are connected to the first longitudinal beam and the second longitudinal beam by connection plates, respectively;
both ends of the second crossbeam are connected to the first longitudinal beam and the second longitudinal beam by connection plates, respectively.

7. The rear structure of the electric vehicle according to claims 1 to 5, wherein a reinforcement bar is disposed on the rear floor at a position where a side face of the second crossbeam is located; a reinforcement bar is disposed on the rear floor at a position where a side face of the storage battery system is located; and a reinforcement bar is disposed on the rear floor at a position where a side face of the CDU system is located.

8. The rear structure of the electric vehicle according to claims 1 to 5, wherein a front end of the rear floor is connected to a middle floor, a rear end of the rear floor is connected to a rear wall outer panel, and left and right sides of the rear floor are connected to rear floor connection plates, respectively.

9. The rear structure of the electric vehicle according to claims 1 to 5, wherein the storage battery system is located at a middle position above the second crossbeam.

10. An electric vehicle, wherein the electric vehicle is configured with the rear structure of the electric vehicle as defined in any one of claims 1 to 9.
